# EUROPÄISCHE PATENTSCHRIFT

(11) **EP 0 610 271 B1**
(45) Veröffentlichungstag und Bekanntmachung des Hinweises auf die Patenterteilung: **28.06.1995**
(21) Anmeldenummer: 92921488.0
(22) Anmeldetag: 21.10.1992
(51) Int. Cl.: G11B 7/09

(54) **AKTUATORANORDNUNG**
ACTUATOR ARRANGEMENT
ACTIONNEUR

(30) Priorität: 31.10.1991 DE 4135908
(43) Veröffentlichungstag der Anmeldung: 17.08.1994
(73) Patentinhaber: DEUTSCHE THOMSON-BRANDT GMBH, 78048 Villingen-Schwenningen (DE)
(72) Erfinder: KÜHN, Hans-Robert, D-7742 St. Georgen (DE); STORZ, Dieter, D-7322 Lauterbach (DE); FÜLDNER, Friedrich, D-7730 VS-Villingen (DE); LAUFER, Helmut, D-7742 St. Georgen (DE); HOCH, Peter, D-7740 Triberg (DE)
(74) Vertreter: Einsel, Robert, Dipl.-Ing.
(86) Internationale Anmeldenummer: EP9202406
(87) Internationale Veröffentlichungsnummer: WO9309534

(56) Entgegenhaltungen:
- EP-A- 0 212 941
- EP-A- 0 358 294
- EP-A- 0 379 757
- EP-A- 0 412 556
- EP-A- 0 464 912
- WO-A-91/01549
- DE-A- 2 645 326
- PATENT ABSTRACTS OF JAPAN vol. 9, no. 90 (P-350) 19 April 1985

## Beschreibung

Die Erfindung betrifft eine Aktuatoranordnung zum Abtasten und/oder Aufzeichnen von Informationen auf Aufzeichnungsträgern. Als Aktuatoranordnung wird eine zur Fein- bzw. Nachsteuerung oder -regelung vorgesehene Anordnung bezeichnet, mit der ein Abtast- bzw. Aufzeichnungskopf in seiner Lage zum Aufzeichnungsträger positioniert wird. Aktuatoren werden unter anderem in optischen und magneto-optischen Aufnahme und Wiedergabegeräten, wie beispielsweise CD-Spieler, bei denen mittels Lichtstrahl Informationen von einem rotierenden Aufzeichnungsträger, der CD, abgetastet werden, verwendet.

Es ist eine exakte Positionierung der Abtastmittel erforderlich, da bereits geringe Abweichungen in der Stellung des Abtast- und/oder Aufzeichnungskopfes zum Aufzeichnungsträger zu Informationsverlusten und Fehlfunktionen führen. Hierzu ist bereits ein Aktuator bzw. Pickup bekannt, der zur Parallelführung der Objektivlinse zwei senkrecht zueinander vorgesehene Drehachsen und einen mit der ersten Drehachse übereinstimmenden Schwerpunkt aufweist, vgl. EP 02 12 941A2. Generell wirken sich hohe und erheblich differierende Umgebungstemperaturen, wie sie beispielsweise beim Betrieb in Kraftfahrzeugen auftreten, nachteilig auf Aktuatoranordnungen aus, die Parallelführungen ausweisen und aufgrund der Parallelführung nicht in allen Richtungen zum Aufzeichnungsträger korrigierbar sind. Bei aus unterschiedlichen Materialien zusammengesetzten Aktuatoranordnungen führen innere Spannungen und bei Kunststoffteilen deren Verformung zu Veränderungen, die insbesondere durch Verwindung beziehungsweise ein Verdrehen der Aktuatoranordnung als Winkelabweichungen in Erscheinung treten.

Es ist daher Aufgabe der Erfindung, eine Aktuatoranordnung zu schaffen, die die Mängel des bekannten Standes der Technik beseitigt.

Diese Aufgabe wird durch die im Anspruch 1 angegebene Erfindung gelöst. Vorteilhafte Weiterbildungen der Erfindung sind in den Unteransprüchen angegeben.

Die Erfindung geht von folgenden Tatsachen und Erkenntnissen aus. Während bisher entweder auf eine direkte Verbindung zwischen dem Objektivträger und einer Basisplatte entweder vollständig verzichtet oder diese von federnden Elementen oder Gelenken gebildet wurde, wird als nachgiebige Unterstützung erfindungsgemäß ein elastisches Formteil vorgeschlagen, das sowohl eine mechanische Führung als auch eine gewünschte Auslenkung ermöglicht. Der den Abtast- und/oder Aufzeichnungskopf aufnehmende Träger erreicht dadurch eine den gewünschten Auslenkrichtungen und Auslenkwinkeln entsprechende Beweglichtkeit beziehungsweise Auslenkbarkeit, die der eines frei im Magnetfeld beweglichen Objektivträgers entspricht. In überraschender Weise ist dann zur Steuerung oder Regelung der Lage des den Abtast- und/oder Aufzeichnungskopf aufnehmenden Trägers beziehungsweise eines Objektivträgers nur eine Anzahl von aktiven Bewegungsmitteln vorzusehen, die mit der Anzahl der unabhängig voneinander vorgesehenen geradlinigen Auslenkrichtungen und Auslenkwinkel übereinstimmt. Gegenüber den sechs Spulen eines im Magnetfeld frei schwebenden, von einer dauermagnetischen Hülse gebildeten Objektivträgers sind nur noch fünf Spulen erforderlich, um eine Auslenkbarkeit sowohl in den drei geradlinigen Auslenkrichtungen als auch um die beiden Auslenkwinkel zu gewährleisten.

Die Gestalt der elastischen Formteile ist entsprechend der gewünschten Dämpfungscharakteristik, insbesondere in den Grenzlagen, die ein hartes Anschlagen des Abtast- und/oder Aufzeichnungskopfes an feststehenden Teilen der Anordnung verhindern soll und in Abhängigkeit von der Art der Befestigung der elastischen Formteile am Träger und an der Basisplatte vorgesehen. Bevorzugt wird eine treppenförmige Gestalt des elastischen Formteils, das Basisplatte und Träger über zwei Stufen miteinander verbindet. Die Verbindung des elastischen Formteils erfolgt dabei mit der Basisplatte an der Verankerung des Stoßes der Treppe und mit dem Träger, der den Abtast- und/oder Aufzeichnungskopf aufnimmt, an der Aufhängung des Trittes der vom elastischen Formteil gebildeten Treppe. Zwei elastische Formteile, die vorzugsweise zum Abtast- und/oder Aufzeichnungskopf symmetrisch angeordnet sind, gewährleisten seine Auslenkbarkeit sowohl in parallelen, einen Winkel von neunzig Grad zueinander einschließenden Richtungen zum Aufzeichnungsträger, als auch in den Ebenen, die diese Richtungen jeweils mit einer Senkrechten bilden, sowie in Richtung dieser Senkrechten. Die Führung ist im Auslenkbereich leichtgängig, dämpft insbesondere in den Grenzlagen und bildet im Vergleich zu einer Parallelführung geringere Massenanteile, die im Zusammenhang mit der Auslenkung zu beschleunigen sind.
Zur Auslenkung in drei Richtungen und zum Bilden von zwei Drehmomenten, die der Auslenkung um Winkel dienen, sind fünf Spulen vorgesehen, die separat mit einer Steuer- oder Regeleinrichtung angesteuert werden und einer Anordnung von Permanentmagneten gegenüberliegend, auf dem den Abtast- und/oder Aufzeichnungskopf aufnehmenden Träger befestigt sind. Die zur Auslenkung in einer Richtung oder um einen Winkel erforderlichen Steuersignale weisen eine weitestgehende Entkopplung von der Ansteuerung der anderen, die Position des Trägers bestimmenden Steuersignale auf, wodurch sich der Aufwand zur Steuerung gegenüber einem frei im Magnetfeld schwebenden Objektivträger verringert.
Für die Auslenkung senkrecht zum Aufzeichnungsträger ist eine Spule vorgesehen und für parallele Auslenkungen zum Aufzeichnungsträger sind jeweils zwei Spulen vorgesehen, die einerseits eine geradlinige Führung ermöglichen und andererseits durch unterschiedliche Ansteuerung gleichzeitig zur Winkeleinstellung durch Bildung eines Drehmomentes verwendet werden.

Diese vorteilhaften Wirkungen können auch mit vier elastischen Formteilen oder mit von einer treppenartigen Gestalt abweichenden elastischen Formteilen erzielt werden. Darüber hinaus können elastische Formteile in vorteilhafter Weise mit einer Parallelführung entsprechend DE 39 24 190 A1 zu einer nachgiebigen Unterstützung kombiniert werden, da herstellungsbedingte Abweichungen und sich durch wechselnde und hohe Umgebungstemperaturen einstellende Veränderungen korrigierbar werden. so daß sich die Anforderungen an die Maßhaltigkeit und Formstabilität der Einzelteile verringern und eine Justage sich erübrigt oder automatisiert durchführbar ist.

Dies ist sowohl für Aktuatoranordnungen mit in Abhängigkeit von der Lage beziehungsweise Stellung zum Aufzeichnungsträger geregelten Abtast- und/oder Aufzeichnungsköpfen als auch für Aktuatoranordnungen zutreffend, deren Auslenkrichtungen an der Achse des den Aufzeichnungsträger aufnehmenden Plattentellers orientiert sind.

Die Erfindung ist sowohl für CD-Spieler, Videoplattenspieler als auch für davon abweichende Aktuatoranordnungen anwendbar, mit denen genaue Feinpositionierungen vorzunehmen sind und wird nachfolgend in Ausführungsbeispielen anhand von Zeichnungen näher erläutert.

Es zeigen:
- Fig. 1: Prinzipskizze einer ersten Aktuatoranordnung mit elastischen Formteilen F1, F2 in Seiten- und Draufsicht ohne Bewegungsmittel,
- Fig. 2a..c: Prinzipskizzen für unterschiedliche Auslenkungen durch aktive Bewegungsmittel,
- Fig. 3: Skizze zum Definieren von Auslenkrichtungen des Aktuators zum Aufzeichnungsträger AT,
- Fig. 4: Skizze einer zweiten Aktuatoranordnung mit elastischen Formteilen F1....F4,
- Fig. 5a..e: Gestaltungsbeispiele elastischer Formteile,
- Fig. 6: Skizze einer dritten Aktuatoranordnung auf der Grundlage einer Parallelführung,
- Fig. 7: Skizze einer vierten Aktuatoranordnung mit Einkerbungen aufweisenden elastischen Formteilen,
- Fig. 8: Skizze einer fünften, aus einem elastischen Formteil F und Bewegungsmitteln aufgebauten Aktuatoranordnung,
- Fig. 9: Schaltungsanordnung zum Steuern der in Fig. 8 angegebenen Aktuatoranordnung.

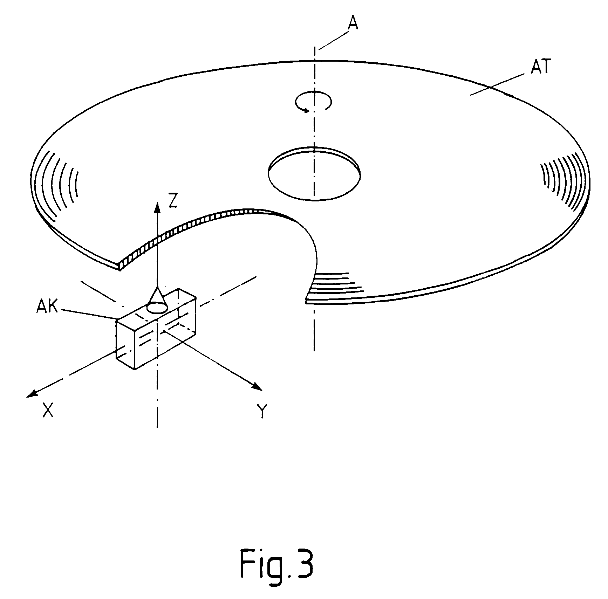

Der Beschreibung von Ausführungsvarianten der Erfindung wird eine Definition von Bezugslagen zwischen dem Aufzeichnungsträger AT und dem Abtast- und/oder Aufzeichnungskopf AK gemäß Fig. 3 vorangestellt und einheitlich den weiteren Ausführungen zugrundegelegt. Den gleichen Gegenstand betreffende Bezugszeichen werden ebenfalls in den Figuren übereinstimmend verwendet.

Entsprechend Fig. 3 werden mit einem vom Zentrum des Abtast- und/oder Aufzeichnungskopfes AK ausgehenden Koordinatenkreuz eine senkrecht auf den Aufzeichnungsträger AT gerichtete Fokusrichtung z, eine parallel zum Aufzeichnungsträger AT und senkrecht zur Informationsspur des Aufzeichnungsträgers AT verlaufende Radialrichtung x sowie eine parallel zum Aufzeichnungsträger AT und entlang der Informationsspur verlaufende Tangentialrichtung y definiert. Der Aufzeichnungsträger AT rotiert, wie durch einen kreisförmigen Pfeil angedeutet, um eine Achse A, die die Achse A des den Aufzeichnungsträger AT aufnehmenden Plattentellers darstellt.

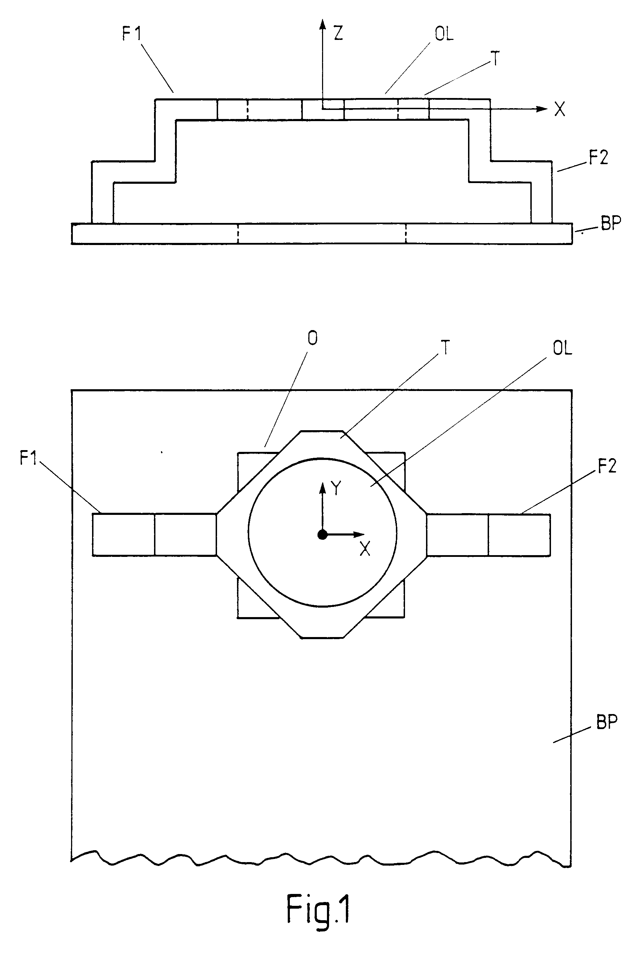

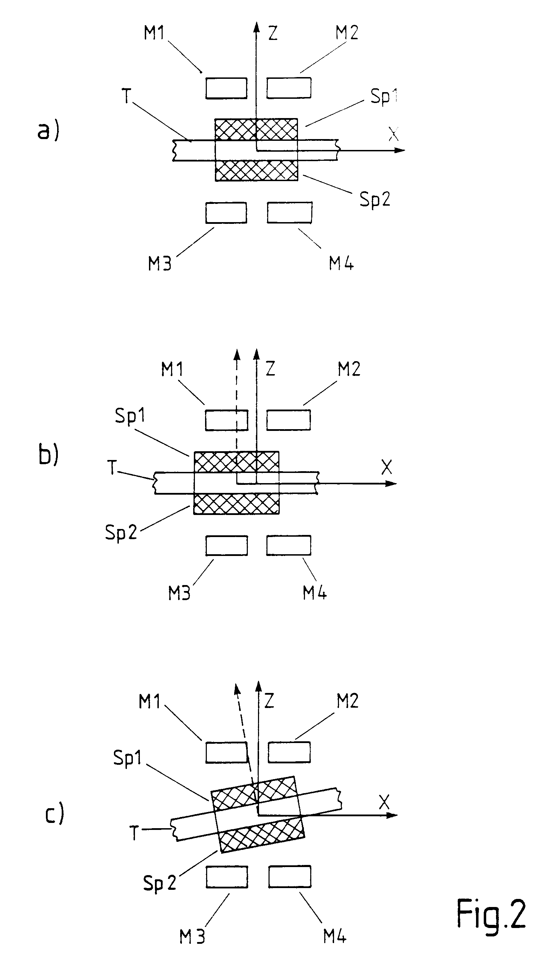

In einer ersten Ausführung der Erfindung gemäß Fig. 1 und Fig. 2 ist der Abtast- und/oder Aufzeichnungskopf AK eine Objektivlinse OL, die von einem Träger T aufgenommen ist, der erfindungsgemäß über elastische Formteile F1, F2 auf einer Basisplatte BP, die der Grobpositionierung der Objektivlinse OL dient, abgestützt ist. Fig. 1 entsprechend sind die elastischen Formteile F1, F2 treppenartig gestaltete Kunststoffprofile, die in allen Richtungen elastisch verformbar sind und eine Dämpfungscharakteristik aufweisen, die im gewünschten Auslenkbereich dazu dient, in erster Linie Eigenresonanzen des Schwingungsschildes zu vermeiden und in den Grenzlagen des Auslenkbereiches ein Anschlagen der Objektivlinse OL beziehungsweise des die Objektivlinse OL aufnehmenden Trägers T an der Basisplatte BP oder sonstiger feststehender Teile verhindert. Die treppenartig gestalteten Formteile F1, F2 sind symmetrisch zur Objektivlinse OL und zum die Objektivlinse OL zentral aufnehmenden Träger T angeordnet sowie gegenüberliegend an abgeflachten Ecken des quadratischen Trägers T befestigt. Die Verbindung mit dem Träger T ist jeweils an der Aufhängung des Trittes der von den elastischen Formteilen F1, F2 gebildete Treppen vorgesehen. Andererseits sind die treppenartigen Formteile F1, F2 jeweils mit der Verankerung des Stoßes der Treppe auf der Basisplatte BP abgestützt beziehungsweise mit der Basisplatte BP verbunden. Die Objektivlinse OL ist zentral über eine in der Basisplatte BP vorgesehenen Öffnung O positioniert und die einzelnen Teile sind in nicht dargestellter Art und Weise durch formschlüssige Rastmittel, sogenannten Snap-in-Verbindungen miteinander verbunden. Ebenfalls nicht dargestellt wurden in Fig. 1 die Bewegungsmittel, mit denen die Auslenkung der Objektivlinse OL in Fokusrichtung z, Radialrichtung x, Tangentialrichtung y und in Richtung der Ebenen, die die Radialrichtung x sowie die Tangentialrichtung y mit der Fokusrichtung z bilden, erfolgt. Als aktive Bewegungsmittel sind in den Träger T eingefügte Spulen Sp vorgesehen, die Permanentmagneten M gegenüberliegend angeordnet sind. Die Auslenkung in Fokusrichtung z erfolgt in an sich bekannter und nicht dargestellter Weise mit einer Spule, deren Achse mit der optischen Achse der Objektivlinse OL übereinstimmt und einen Durchmesser aufweist, der mindestens dem Durchmesser der Objektivlinse OL entspricht. Für die Auslenkung der Objektivlinse OL in Tangentialrichtung y und in Radialrichtung x sowie um Winkel innerhalb der Ebenen, die diese Richtungen x, y mit der Fokusrichtung z bilden, sind zwei rechtwinklig zueinander angeordnete und von jeweils einzeln ansteuerbaren Spulen Sp1, Sp2 gebildete Spulenpaare vorgesehen, von denen ein Spulenpaar in Fig. 2 dargestellt ist. Die ein Spulenpaar bildenden Spulen Sp1, Sp2 sind parallel zueinander und jeweils parallel einem Paar von Permanentmagneten M1 ... M4 gegenüberliegend angeordnet, die stationär auf der Basisplatte BP fixiert sind. Die Spulen Sp1, Sp2 sind, wie in Fig. 2 dargestellt, an äußeren Seiten auf dem Träger T mit ihren Achsen parallel zur Ebene des Trägers T in Auslenkrichtung angeordnet und die jeweils nebeneinander liegenden, ein Paar bildenden Permanentmagnete M1, M2 bzw. M3, M4 weisen an den sich gegenüberliegenden Seiten gleichnamige magnetische Pole auf. Die Anordnung ist Fig. 2 entsprechend symmetrisch aufgebaut und die als Spulen Sp1, Sp2 vorgesehenen aktiven Bewegungsmittel führen Fig. 2 b entsprechend bei gleichsinniger Ansteuerung zu einer geradlinigen Auslenkung und Fig. 2 c entsprechend bei gegensinniger Ansteuerung zu einem Verdrehen beziehungsweise einer Winkelauslenkung des Trägers T und der Objektivlinse OL. Durch Überlagerung der Ansteuersignale werden sowohl eine geradlinige als auch eine Auslenkung um einen Winkel erreicht. Die Symmetrie der elastischen Formteile gewährleistet dabei, daß die Auslenkrichtung mit der Richtung der Auslenkkraft übereinstimmt. Zur Auslenkung in Radialrichtung x und um einen Winkel in der die Radialrichtung x mit der Fokusrichtung z bildenden Ebene, ist das erste Spulenpaar und zur Auslenkung in Tangentialrichtung y und um einen Winkel in der die Tangentialrichtung y mit der Fokusrichtung z bildenden Ebene ist das zweite Spulenpaar vorgesehen. Mit nur fünf unabhängig voneinander ansteuerbaren Spulen wird der Akuator, der hier von einer Objektivlinse OL gebildet wird, in drei geradlinigen Richtungen und in zwei Winkelrichtungen auslenkbar. Mit den elastischen Formteilen F1, F2 verfügt der Träger T sowohl über eine mechanische Führung und ist in den gewünschten Richtungen auslenkbar. Die nachgiebige Unterstützung durch die elastischen Formteile F1, F2 wirkt Schwingungen entgegen und verhindert ein Anschlagen des Aktuators an feststehenden Teilen und die zur Auslenkung erforderlichen Steuerspannungen und Ströme stehen in einfachem Zusammenhang zu einer durchzuführenden Auslenkung, wodurch eine weitestgehende Entkopplung zwischen einzelnen Verstellkräften erreicht wird, die andererseits überlagert werden können, so daß der zur Steuerung erforderliche Aufwand gering ist. Zur optimalen Positionierung des Aktuators beziehungsweise der Objektivlinse OL zum Aufzeichnungsträger AT kann das in DE 40 28 703 angegebene Verfahren verwendet werden, mit dem die zur senkrechten Positionierung des Aktuators zum Aufzeichnungsträger AT erforderlichen Regelsignale bereitgestellt werden.

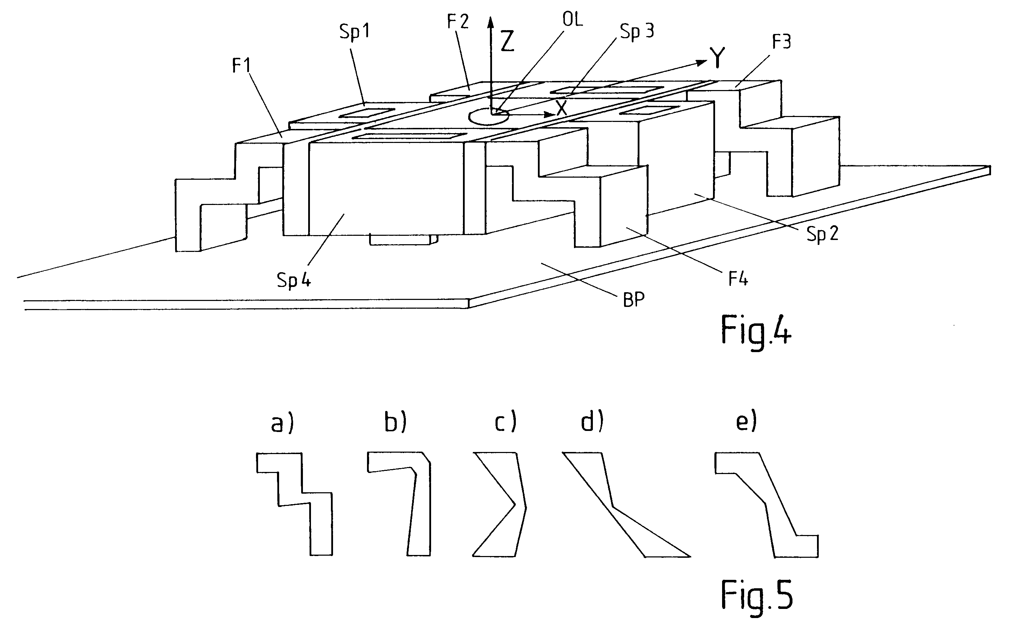

Insbesondere für Anwendungen, bei denen im normalen Betrieb Abweichungen hinsichtlich des Winkels, unter dem ein Lichtstrahl den Aufzeichnungsträger AT abtastet, zugelassen werden können, wird eine in Fig. 4 skizzierte Ausführung der Erfindung angegeben. Zur nachgiebigen Unterstützung des die Objektivlinse OL aufnehmenden Trägers T sind vier elastische Formteile F1 ... F4 vorgesehen, die symmetrisch zur Objektivlinse OL an den Enden der Seiten des quadratischen Trägers T gegenüberliegend angeordnet sind. Die elastischen Formteile F1 ... F4 sind analog zur vorgenannten Ausführung der Erfindung treppenartig gestaltet und verbinden in entsprechender Weise den Träger T mit der Basisplatte BP. Durch vier elastische Formteile F1 ... F4, die symmetrisch angeordnet sind, wird insbesondere eine hinsichtlich unterschiedlicher Auslenkungen gleichmäßigere mechanisch wirksame Elastizität erreicht. Es sind vier Spulen Sp1 ... Sp4 ebenfalls symmetrisch zur optischen Achse der Objektivlinse OL angeordnet, die zur Auslenkung der Objektivlinse OL sowohl in Fokusrichtung z als auch zur Einstellung von Winkeln in den Ebenen, die die Radialrichtung x und die Tangentialrichtung y mit der Fokusrichtung z bilden, vorgesehen sind. Die Nachführung des Aktuators zu von einer aktuellen Stellung des Aktuators abweichenden Orten auf dem Aufzeichnungsträger AT ist hier ausschließlich durch Kippwinkelverstellung der Objektivlinse OL vorgesehen, die mit den Spulen Sp1 ... Sp4 erfolgt, denen jeweils ein Permanentmagnet zugeordnet ist. Die Auslenkung in Fokusrichtung z erfolgt durch gleichsinnige Ansteuerung von mindestens zwei der vier Spulen Sp1 ... Sp4, während eine Kippwinkelverstellung durch Ansteuerung einer der Spulen Sp1 ... Sp4 oder gegensinnige Ansteuerung von zwei gegenüberliegenden, der Spulen Sp1 ... Sp4 vorgenommen wird. Es sind jedoch auch von dieser Ausführung abweichende Kombinationen von elastischen Formteilen F mit Bewegungsmitteln realisierbar.

Die Elastizität der elastischen Formteile F wird sowohl von deren Werkstoffeigenschaften als auch von deren Gestalt bestimmt. Davon ausgehend sind in Fig. 5 a...e Beispiele für die Gestaltung der elastischen Formteile F angegeben, die in besonderer Weise die Werkstoffeigenschaften als auch die gewünschte Dämpfungscharakteristik sowie die Art der Befestigung am Träger T und an der Basisplatte BP berücksichtigen. So werden gemäß Fig. 5 a durch Verringern des Querschnittes des Untertrittes und Verringern der Trittlänge eines treppenartigen elastischen Formteils F bei einem vergleichbaren Elastizitätsmodul eine größere Elastizität und durch verringern der Stufenzahl entsprechend Fig. 5 b eine geringere Elastizität erreicht. In den Fig. 5 c...e sind elastische Formteile F angegeben; bei denen die Anschlußflächen, an denen die Verbindung des elastischen Formteils F mit dem Träger T und der Basisplatte BP vorgesehen ist, parallel zueinander verlaufen. Die werkstoffbedingte Elastizität der elastischen Formteile F wird durch vorgesehene Einschnürungen beziehungsweise Einkerbungen konstruktiv unterstützt und die Anschlußflächen können sowohl senkrecht als auch parallel zu den Ebenen von Träger T oder Basisplatte BP vorgesehen werden.

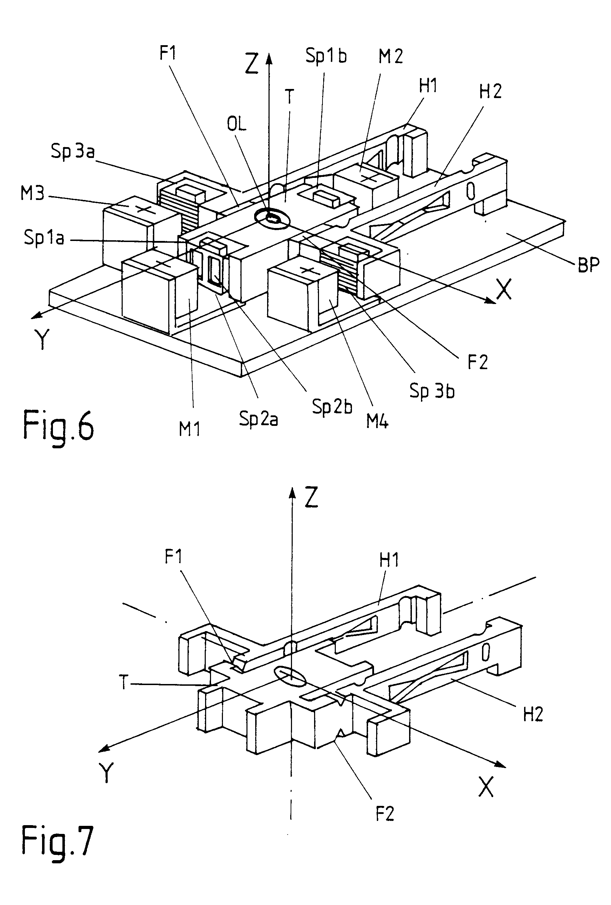

In weiteren Ausführungen der Erfindung sind elastische Formteile F mit einer gemäß DE 29 24 190 A1 bekannten Parallelführung eines Aktuators vorteilhaft kombiniert, beziehungsweise elastische Formteile F in die Parallelführung integriert. Fig. 6 entsprechend sind der Träger T und die gemäß DE 29 24 190 A1 die Parallelführung bildenden Haltevorrichtungen H1, H2 über elastische Formteile F1, F2 miteinander verbunden. Dadurch wird entgegen der mit der Parallelführung ursprünglich beabsichtigten, möglichst stabilen Führung ein zunächst nachteilig erscheinendes Element eingefügt, das auf Grund seiner Elastizität zu Abweichungen führen kann. Die Elastizität der elastischen Formteile F wirkt jedoch dahingehend vorteilhaft, daß herstellungsbedingte Toleranzen oder durch hohe Temperatureinwirkungen bedingte Abweichungen von der ursprünglich ohne Justage beabsichtigten Orientierung des Aktuator nachträglich korrigierbar werden. Die an die Genauigkeit der Einzelteile zu stellenden Anforderungen und damit verbundenen Kosten werden verringert und mit einer entsprechenden Regelung kann darüber hinaus eine höhere Genauigkeit und Flexibilität bei der Nachführung des Aktuators zum Aufzeichnungsträger AT erreicht werden. Als Bewegungsmittel wird eine allgemein bekannte Spulenanordnung verwendet, die Permanentmagneten gegenüberliegend angeordnet ist. Davon abweichend werden jedoch geteilte Spulen Sp1a, Sp1b verwendet, die in Reihe geschaltet und für eine möglichst geradlinige Steuerung in Fokusrichtung z vorgesehen sind. Auf den Spulen Sp1a, Sp1b sind jeweils zwei weitere Spulen Sp2a, Sp2b angeordnet, die der Steuerung in Radialrichtung x dienen. Die als Scharnier wirkenden Gelenke der die Parallelführung bildenden Haltevorrichtungen gewährleisten in Fokusrichtung z und in Radialrichtung x eine geradlinige Bewegung des Aktuators. Eine Drehbewegung in der die Tangentialrichtung y und Fokusrichtung z einschließenden Ebene beziehungsweise um die Radialrichtung x wird durch unterschiedliche Ansteuerung der Spulen Sp1a, Sp1b erreicht, deren Reihenschaltung hierzu einen Mittenabgriff aufweist. Für eine Drehbewegung in der die Radialrichtung x und Fokusrichtung z bildenden Ebene, also um die Tangentialrichtung y, werden die Spulen Sp3a, Sp3b unterschiedlich angesteuert. Es wird eine ausschließlich elektrisch anzusteuernde Glieder aufweisende Justageeinrichtung geschaffen, die zum einmaligen automatischen Abgleich mit dann beim Betrieb dem Abgleich entsprechend konstanten Steuerspannungen oder im Zusammenhang mit einer Regelung zum Gewährleisten einer stets senkrechten Aktuatorstellung zum Aufzeichnungsträger AT verwendbar ist. Die elastischen Formteile F1, F2 sind Fig. 6 entsprechend elastische, quaderförmige Kunststoffblöcke. Sie können jedoch auch in einer weiteren Ausführung entsprechend Fig. 7 vorteilhaft von Einkerbungen im Bereich der Verbindungen zwischen den Haltevorrichtungen H1, H2 und dem Träger T gebildet werden. Die aus den Haltevorrichtungen H1, H2, den elastischen Formteilen F1, F2 und dem Träger T bestehende Anordnung ist dann Fig. 7 entsprechend aus einem Stück Kunststoff gefertigt.

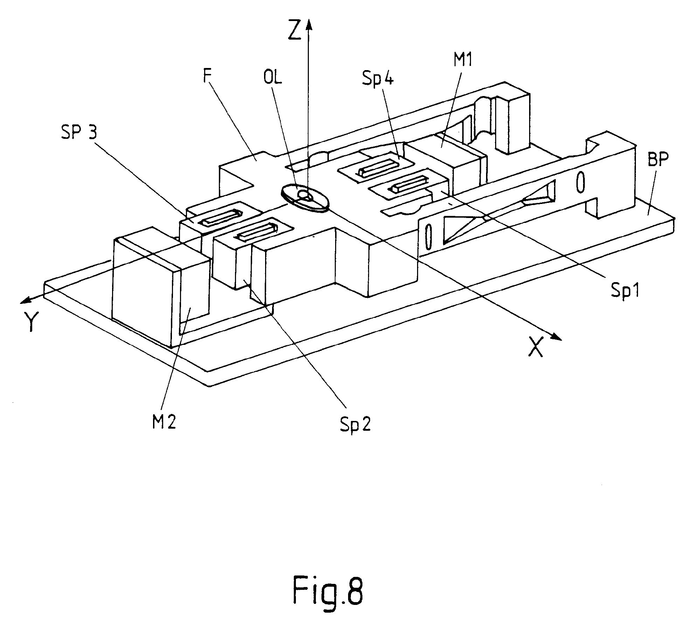

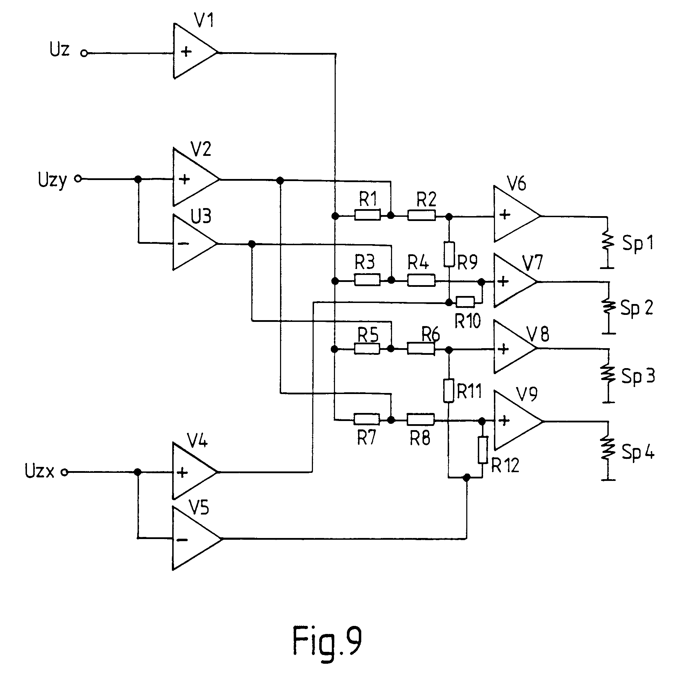

In einer weiteren Ausführung der Erfindung gemäß Fig. 8 ist zum Führen der Objektivlinse OL ein elastisches Formteil F vorgesehen, das in sich die vorgenannten Haltevorrichtungen H1, H2 und den Träger T vereinigt. Im Gegensatz zu den gemäß DE 39 24 190 A1 bekannten Haltevorrichtungen, bei denen ausschließlich eine Beweglichkeit in den durch Einkerbungen gebildeten Gelenken gewünscht wird, ist für die Fig. 8 entsprechende Anordnung ein Werkstoff vorgesehen, der auch außerhalb dieser Einkerbungen eine Elastizität aufweist, die insbesondere ein Verkippen der Objektivlinse OL ohne zusätzliche Einkerbungen im Bereich der Verbindungen zwischen den Haltevorrichtungen F1, F2 und dem Träger T, wie sie gemäß Fig. 7 vorgesehen sind, ermöglicht. Als nachgiebige Unterstützung der Objektivlinse OL ist nur ein elastisches Formteil F erforderlich, das mit einer Anzahl aktiver Bewegungsmittel kombiniert ist, die den beabsichtigten Auslenkungen entspricht. Die Fig. 8 entsprechende Ausführung ist in Analogie zur Fig. 4 entsprechenden Ausführung für eine geradlinige Auslenkung in Fokusrichtung z und für Drehbewegungen um die Radialrichtung x sowie Tangentialrichtung y vorgesehen. Als Bewegungsmittel sind vier Spulen Sp1 ... Sp4 symmetrisch zur Objektivlinse OL angeordnet, von denen jeweils zwei Spulen Sp1, Sp4 und Sp2, Sp3 auf von einem Permanentmagneten M1 bzw. M2 gebildete Magnetkerne wirken. Kippbewegungen werden ebenfalls durch unterschiedliche Spulenansteuerung und die Auslenkung in Fokusrichtung z durch Ansteuerung aller vier Spulen Sp1 ... Sp4 erreicht. Eine Schaltungsanordnung zur Steuerung der Fig. 8 entsprechenden Aktuatoranordnung ist in Fig. 9 angegeben. Sie besteht aus Verstärkern V1 ... V9, Widerständen R1 ... R 12 und den die aktiven Bewegungsmittel bildenden Spulen Sp1 ... Sp4. Zur Nachführung des Aktuators werden mit bekannten Verfahren vom Abtastsignal abgeleitete Regelspannungen Uz zur Steuerung in Fokusrichtung z, Uzy für Drehbewegungen um die Radialrichtung x und Uzx für Drehbewegungen um die Tangentialrichtung y verwendet. Die Regelspannung Uz wird den vier Spulen Sp1 .... Sp4 gleichmäßig über den nichtinvertierenden Verstärker V1 und jeweils einer aus zwei Widerständen R1, R2; R3, R4; R5, R6; R7, R8 bestehenden Reihenschaltung mit einem nichtinvertierenden Verstärker V6, V7, V8, V9 zugeführt. Den Verbindungspunkten der zwei jeweils in Reihe geschalteten Widerstände R1, R2; R3, R4; R5, R6; R7, R8 wird jeweils einem der paarig vorgesehenen Spulenpaare Sp2, Sp3 und Sp1, Sp4 entsprechend über den nichtinvertierenden Verstärker V2 beziehungsweise invertierenden Verstärker V3 die Regelspannung Uzy zum Erzeugen einer Drehbewegung um die Radialrichtung x zugeführt. Analog sind ein nichtinvertierender Verstärker V4 und ein invertierender Verstärker V5 vorgesehen, die zum Erzeugen einer Drehbewegung um die Tangentialrichtung y an der Regelspannung Uzx angeschlossen sind und über jeweils an ihnen angeschlossene Widerstände R9, R10 beziehungsweise R11, R12 ein der Regelspannung Uzx entsprechendes Signal in die an den Spulen Sp1 ... Sp4 angeschlossenen Verstärker V6 ... V9 speisen. Der nichtinvertierende Verstärker V4 speist dabei die sich in den Spulenpaaren Sp1, Sp4 und Sp2, Sp3 gegenüberliegen Spulen Sp1 und Sp2 über die Widerstände R9 und R10 sowie die nichtinvertierenden Verstärker V6, V7. Die Spulen Sp3 und Sp4 sind über den nichtinvertierenden Verstärker V8 und Widerstand R11 beziehungsweise den nichtinvertierenden Verstärker V9 und Widerstand R12 am invertierenden Verstärker V5 angeschlossen. Wird zusätzlich eine geradlinige Auslenkung in Radialrichtung x gewünscht, können weitere Bewegungsmittel vorgesehen werden, so daß ein baukastenartiges System zur Verfügung steht, das den Erfordernissen entsprechend ausbaufähig ist. Die Aktuatoranordnung kann, wie in den Ausführungsbeispielen beschrieben, einen Abtastkopf AK in Form einer Objektivlinse OL bei CD-Spielern, einen Abtast- und Aufzeichnungskopf AK für wiederbespielbare Aufzeichnungsträger AT oder auch nur einen Aufzeichnungskopf AK aufnehmen.

## Patentansprüche

1. Aktuatoranordnung zum Abtasten und/oder Aufzeichnen einer auf einem relativ dazu bewegten Aufzeichnungsträger (AT) als Spur oder als Spuren aufgezeichneten oder aufzuzeichnenden Information mit einem Abtast- und/oder Aufzeichnungskopf (AK), mit einem den Abtast- und/oder Aufzeichnungskopf (AK) aufnehmenden Träger (T), der über eine nachgiebige Unterstützung mit einer Basisplatte (BP) verbunden und mit an einer Steuer- oder Regeleinrichtung angeschlossenen Bewegungsmitteln auslenkbar ist, die den Abtast- und/oder Aufzeichnungskopf (AK) in optimaler Stellung zum Aufzeichnungsträger (AT) führen, **dadurch gekennzeichnet, daß** die nachgiebige Unterstützung mindestens ein elastisches Formteil (F) derart enthält, daß die optische Achse des Abtast- und/oder Aufzeichnungskopfes (AK) sowohl parallelverschoben als auch mit Bewegungsmitteln um mindestens einen Winkel ausgelenkt werden kann.

2. Aktuatoranordnung nach Anspruch 1, **dadurch gekennzeich****net, daß** das elastische Formteil (F) ein in mindestens einer Richtung und/oder um einen Winkel elastisch verformbares Kunststoff- oder Gummiformteil ist.

3. Anordnung nach Anspruch 2, **dadurch gekennzeichnet, daß** die elastischen Formteile (F) symmetrisch angeordnete, treppenartig geformte Kunststoff- oder Gummiprofile sind.

4. Aktuatoranordnung nach Anspruch 1, **dadurch gekennzeich****net, daß** die nachgiebige elastische Unterstützung aus einer Kombination von zwei elastischen Formteilen (F1, F2) mit zwei, eine Parallelführung bildenden Haltevorrichtungen (H1, H2) gebildet ist und die elastischen Formteile (F1, F2) in der Verbindung zwischen den Haltevorrichtungen (H1, H2) und dem Träger (T) angeordnet sind.

5. Aktuatoranordnung nach Anspruch 1, **dadurch gekennzeich****net, daß** das elastische Formteil (F) einstückig, in sich sowohl die nachgiebige Unterstützung als auch den Träger (T) aufnehmend ausgebildet ist.

6. Aktuatoranordnung nach Anspruch 1, **dadurch gekennzeichnet, daß** die aktiven Bewegungsmittel auf dem Träger (T) oder dem gleichzeitig den Träger (T) bildenden elastischen Formteil (F) angeordnete und an einer Steuer- oder Regeleinrichtung angeschlossene Spulen (Sp) sind, denen jeweils mindestens ein Permanentmagnet (M) als passives Bewegungsmittel zugeordnet ist.

7. Anordnung nach Anspruch 6, **dadurch gekennzeichnet, daß** zur Auslenkung des Abtast- und/oder Aufzeichnungskopfes (AK) in Fokusrichtung (z) und um Winkel in den Ebenen, die die Fokusrichtung (z) mit der Radialrichtung (x) und der Tangentialrichtung (y) bildet vier einzeln ansteuerbare Spulen (Sp1 ... Sp4) vorgesehen sind, die symmetrisch zur Tangentialrichtung (y) und symmetrisch zur Radialrichtung (x) paarweise angeordnet sind.

8. Anordnung nach Anspruch 7, **dadurch gekennzeichnet, daß** der Abstand zwischen den symmetrisch zur Tangentialrichtung (y) paarweise angeordneten Spulen (Sp2, Sp3; Sp1, Sp4) geringer als der Abstand zwischen den symmetrisch zur Radialrichtung (x) paarweise angeordneten Spulen (Sp1, Sp2; Sp3, Sp4) ist.

## Claims

1. An actuator arrangement for scanning and/or recording an item of information which is, or is to be, recorded as a track or as tracks on a recording medium (AT) which is moved relative thereto using a scanning and/or recording head (AK), including a carrier (T) which accommodates the scanning and/or recording head (AK) and which is connected via a compliant support to a base plate (BP) and is deflectable by moving means which are connected to a control or regulating device and which guide the scanning and/or recording head (AK) in the optimum position with respect to the recording medium (AT), characterised in that the compliant support contains at least one resilient moulded part (F) in such a way that the optical axis of the scanning and/or recording head (AK) can be subject to parallel displacement and can be deflected through at least one angle by moving means.

2. An actuator arrangement in accordance with Claim 1, characterised in that the resilient moulded apart (F) is a part of synthetic material or rubber that is elastically deformable in at least one direction and/or through an angle.

3. An arrangement in accordance with Claim 2, characterised in that the resilient moulded parts (F) are synthetic material or rubber sections which are arranged symmetrically and have a step-like shape.

4. An arrangement in accordance with Claim 1, characterised in that the compliant resilient support is formed from a combination of two resilient moulded parts (F1, F2) having two holding devices (H1, H2) forming a parallel guide and the resilient moulded parts (F1, F2) are arranged in the connection between the holding devices (H1, H2) and the carrier (T).

5. An actuator arrangement in accordance with Claim 1, characterised in that the resilient moulded part (F) is formed as a single piece which incorporates both the compliant support and the carrier (T).

6. An actuator arrangement in accordance with Claim 1, characterised in that the active moving means are coils (Sp) that are arranged on the carrier (T) or on the resilient moulded part (F) which simultaneously forms the carrier (T) and that are connected to a control or regulating device, with which coils there is associated at least one respective permanent magnet (M) as a passive moving means.

7. An arrangement in accordance with Claim 6, characterised in that for deflecting the scanning and/or recording head (AK) in the focusing direction (z) and through angles in the planes which the focusing direction (z) forms with the radial direction (x) and the tangential direction (y), there are provided four individually controllable coils (Sp1 ... Sp4) which are arranged in pairs symmetrical to the tangential direction (y) and symmetrical to the radial direction (x).

8. An arrangement in accordance with Claim 7, characterised in that the spacing between the coils (Sp2, Sp3; Sp1, Sp4) which are arranged in pairs symmetrical to the tangential direction (y) is smaller than the spacing between the coils (Sp1, Sp2; Sp3, Sp4) which are arranged in pairs symmetrical to the radial direction (x).

## Revendications

1. Dispositif de commande de faisceau pour la lecture et/ou l'enregistrement optique d'une information enregistrée ou à enregistrer sur un support d'information AT en mouvement par rapport à lui, avec une tête de lecture et/ou d'enregistrement (AK), avec un support (T) dans la tête de lecture et/ou d'enregistrement (AK), relié par une suspension souple à une plaque de base (BP) et qui peut être déplace par des organes moteurs raccordés à un dispositif de commande et de réglage qui guident la tête de lecture et/ou d'enregistrement (AK) afin que le faisceau soit en position optimale par rapport au support d'information (AT), **caractérisé en ce que** la suspension souple comprend au moins une pièce moulée élastique (F) de telle manière que l'axe optique de la tête de lecture et/ou d'enregistrement (AK) puisse être décalée aussi bien parallèlement que déviée d'au moins un angle par des organes moteurs.

2. Dispositif de commande de faisceau selon la revendication 1, **caractérisé en ce que** la pièce moulée élastique (F) est une pièce en matière plastique ou en caoutchouc déformable élastiquement en au moins une direction et/ou d'un angle.

3. Dispositif de commande de faisceau selon la revendication 1, **caractérisé en ce que** les pièces élastiques moulées (F) sont des profilés de matière plastique ou de caoutchouc, en forme d'escalier, disposés symétriquement.

4. Dispositif de commande de faisceau selon la revendication 1, **caractérisé en ce que** la suspension élastique souple est constituée d'une combinaison de deux pièces élastiques moulées (F1, F2) avec deux dispositifs de fixation (H1, H2) formant un guidage parallèle et en ce que les pièces élastiques moulées (F1, F2) sont disposées dans la jonction entre les dispositifs de fixation (H1, H2) et le support (T).

5. Dispositif de commande de faisceau selon la revendication 1, **caractérisé en ce que** la pièce moulée élastique (F) est formée d'une seule pièce comprenant à la fois la suspension souple et le support (T).

6. Dispositif de commande de faisceau selon la revendication 1, **caractérisé en ce que** les organes moteurs actifs sont des bobines (Sp) disposées sur le support (T) ou sur la pièce moulée élastique (F) formant le support (T) et raccordées à un dispositif de commande ou de réglage, auxquelles est affecté toujours au moins un aimant permanent (M) comme organe moteur passif.

7. Dispositif de commande de faisceau selon la revendication 6, **caractérisé en ce que** quatre bobines (Sp1 ... Sp4) excitables individuellement sont prévues pour le déplacement de la tête de lecture et/ou d'enregistrement (AK) dans la direction de focalisation (z) et la déviation angulaire dans les plans formés par la direction de focalisation (z) avec la direction radiale (x) et la direction tangentielle (y) et sont disposées par paires symétriquement à la direction tangentielle (y) et à la direction radiale (x).

8. Dispositif de commande de faisceau selon la revendication 7, **caractérisé en ce que** la distance entre les bobines (Sp2, Sp3; Sp1, Sp4) disposées par paires symétriquement à la direction tangentielle (y) est plus faible que la distance entre les bobines (Sp1, Sp2; Sp3, Sp4) disposées par paires symétriquement à la direction radiale (x).
